(19)

**Europäisches Patentamt**
**European Patent Office**
**Office européen des brevets**

(11) **EP 3 582 574 B1**

(12) **EUROPEAN PATENT SPECIFICATION**

(45) Date of publication and mention
of the grant of the patent:
**12.07.2023 Bulletin 2023/28**

(21) Application number: **17902014.4**

(22) Date of filing: **24.03.2017**

(51) International Patent Classification (IPC):
***H04W 74/08*** (2009.01)

(52) Cooperative Patent Classification (CPC):
**H04W 74/08; H04W 74/0833**

(86) International application number:
**PCT/CN2017/078185**

(87) International publication number:
**WO 2018/170919 (27.09.2018 Gazette 2018/39)**

(54) **RANDOM ACCESS METHOD AND APPARATUS, DEVICE, AND STORAGE MEDIUM**

DIREKTZUGRIFFSVERFAHREN UND -EINRICHTUNG, VORRICHTUNG SOWIE
SPEICHERMEDIUM

PROCÉDÉ ET APPAREIL D'ACCÈS ALÉATOIRE, DISPOSITIF ET SUPPORT D'ENREGISTREMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2019 Bulletin 2019/51**

(73) Proprietor: **Huawei Technologies Co., Ltd.**
**Longgang District**
**Shenzhen, Guangdong 518129 (CN)**

(72) Inventors:
• **SHAN, Baokun**
**Shenzhen**
**Guangdong 518129 (CN)**
• **YU, Yinghui**
**Shenzhen**
**Guangdong 518129 (CN)**
• **ROLLINGER, Odile**
**Shenzhen**
**Guangdong 518129 (CN)**
• **JIN, Zhe**
**Shenzhen**
**Guangdong 518129 (CN)**

(74) Representative: **Gill Jennings & Every LLP**
**The Broadgate Tower**
**20 Primrose Street**
**London EC2A 2ES (GB)**

(56) References cited:
**CN-A- 102 804 901      US-A1- 2012 063 302**

• **HUAWEI: "Introduction of NB-IoT Enhancements
other than Multicast", 3GPP DRAFT;
36331_CR2625R2_(REL-14)_R2-1702194, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE , vol. RAN WG2, no. Athens,
Greece; 20170213 - 20170217 5 March 2017
(2017-03-05), XP051232627, Retrieved from the
Internet:
URL:http://www.3gpp.org/ftp/Meetings_3GPP_
SYNC/RAN/Docs/ [retrieved on 2017-03-05]**
• **SEQUANS COMMUNICATIONS: "Remaining
aspects of NPRACH on a non-anchor carrier",
3GPP DRAFT; R2-1701662_REMAINING
ASPECTS OF NPRACH ON A NON-ANCHOR
CARRIER, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CED , vol. RAN WG2, no.
Athens, Greece; 20170213 - 20170217 4 February
2017 (2017-02-04), XP051223591, Retrieved from
the Internet:
URL:http://www.3gpp.org/ftp/tsg_ran/WG2_RL
2/TSGR2_97/Docs/ [retrieved on 2017-02-04]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- ZTE: "Consideration for PRACH on multi-carrier in NB-IoT", 3GPP DRAFT; R2-164859 CONSIDERATION FOR PRACH ON MULTI-CARRIER IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Gothenburg, Sweden; 20160822 - 20160826 21 August 2016 (2016-08-21), XP051126554, Retrieved from the Internet: URL:http://www.3gpp.org/ftp/Meetings_3GPP_SYNC/RAN2/Docs/ [retrieved on 2016-08-21]
- HUAWEI: "NPRACH on Non-anchor NB-IoT Carrier", 3GPP TSG-RAN WG2 Meeting #96 R2-167816, 4 November 2016 (2016-11-04), XP051192581,

**Description**

**TECHNICAL FIELD**

This application relates to communications technologies, and in particular, to a random access method and apparatus, a device, and a storage medium.

**BACKGROUND**

Currently, a narrowband Internet of Things (narrowband Internet of Things, NB-IoT) terminal device may initiate random access and monitor paging on a plurality of carriers.

A random access process is a communication procedure initiated by the terminal device, and is one of most basic and important procedures in an NB-IoT system. Objectives of the random access process include establishing a communication connection, obtaining uplink synchronization, applying for an uplink resource, and the like. Initiation of the random access process has several types. For example, the random access process is divided into idle-state random access and connected-state random access based on a status of the terminal device during random access initiation. The connected-state random access is further divided into random access actively initiated by the terminal device and random access initiated by a base station by using a physical downlink control channel (Physical Downlink Control Channel, PDCCH) order (order). When triggering random access of the terminal device by using the PDCCH order, a network indicates, in signaling, a carrier to be used by the terminal device. After one or more times of access attempted by the terminal device on the carrier all fail, the terminal device increases a coverage level, and randomly selects a new carrier that supports the coverage level to re-attempt random access.

However, the base station usually reserves random access resources on some specific carriers, and the terminal device randomly selects a new carrier for access. For the terminal device, it cannot be ensured that the randomly selected carrier and a resource correspondingly used on the carrier are reserved by the base station, and consequently a collision probability greatly increases. In addition, the terminal device may randomly select a reserved resource on another carrier. This causes interference to a terminal device that should have used the resource.

US2012063302 relates to random access design in a multiple component carrier communication network.

HUAWEI, "Introduction of NB-IoT Enhancements other than Multicast", vol. RAN WG2, no. Athens, Greece; 20170213 - 20170217, (20170305), 3GPP DRAFT; 36331_CR2625R2_(REL-14)_R2-1702194, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN/Docs/ relates to NB-IoT enhancements other than multicast.

SEQUANS COMMUNICATIONS, "Remaining aspects of NPRACH on a non-anchor carrier", vol. RAN WG2, no. Athens, Greece; 20170213 - 20170217, (20170204), 3GPP DRAFT; R2-1701662 REMAINING ASPECTS OF NPRACH ON A NON-ANCHOR CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED, URL: http://www.3gpp.org/ftp/tsg_ran/WG2_RL2/TSGR2_97/Docs/ relates to remaining aspects of NPRACH on a non-anchor carrier.

**SUMMARY**

Embodiments of this application provide a random access method and apparatus, a device, and a storage medium, to resolve a problem that a collision probability greatly increases when a terminal device randomly selects a new carrier for access, but it cannot be ensured that the randomly selected carrier and a resource correspondingly used on the carrier are resources reserved by a base station.

The invention has been defined in the independent claims. Further technical features of the invention have been defined in the respective dependent claims.

Any reference to inventions or embodiments not falling within the scope of the independent claims are to be interpreted as examples useful for understanding the invention.

The terminal device may pre-obtain a list, namely, the access carrier information list, including all carriers that can support random access. The list may be received from a broadcast of a system, or may be preconfigured on the terminal device. This is not limited in this solution. After initiating a random access process, the base station indicates the first access carrier for performing random access to the terminal device. However, in the access process, due to a possible coverage limitation, after a plurality of times of access performed by the terminal device fail, the terminal device needs to increase a coverage level and redetermine a new access carrier. In this solution, the new second access carrier determined by the terminal device is determined based on the first access carrier, instead of being randomly selected. In this way, the base station may also determine, based on the first access carrier, the access carrier used by the terminal device, so as to configure a reserved resource. This avoids a collision between the terminal device and another terminal device, and reduces interference.

Screening is performed on the access carrier information list, the information about all the carriers that can support the new coverage level obtained after the terminal device increases the coverage level is screened out from the access carrier information list to obtain the first carrier information list, the index of the second access carrier is obtained through calculation based on an index of the first access carrier by using the preset algorithm, and the second access carrier is determined from the first carrier information list based on the index of the second access carrier. Alternatively, screening is performed on the access carrier information list, information about all non-anchor carriers that can support the new coverage level obtained after the terminal device increases the coverage level is screened out from the access carrier information list to obtain the first carrier information list, and then the second access carrier is determined from the first carrier information list based on the index that is obtained through calculation and that is of the second access carrier. This can avoid selecting an anchor carrier.

The preset algorithm is that an index of a new access carrier may be determined based on an index of an access carrier specified by a base station and a quantity of available access carriers.

If the terminal device determines the second access carrier from the first carrier information list that includes the information about all the carriers that support the new coverage level, the index of the second access carrier is equal to a remainder obtained by dividing the index of the first access carrier by the quantity of all the carriers that support the new coverage level.

If the terminal device determines the second access carrier from the first carrier information list that includes the information about all the non-anchor carriers that support the new coverage level, the index of the second access carrier is equal to a remainder obtained by dividing the index of the first access carrier by the quantity of all the non-anchor carriers that support the new coverage level.

According to the random access method and apparatus, the device, and the storage medium that are provided in the embodiments, the terminal device determines the second access carrier based on the pre-obtained access carrier information list and the information about the first access carrier that is indicated by the base station and that can be used for access, the access carrier information list includes information about all carriers that support random access, and then the terminal device performs random access on the second access carrier. When performing random access, the terminal device determines the new second access carrier in the access carrier information list based on the first access carrier already known by the base station, instead of randomly selecting an access carrier. The base station may also determine, based on the indicated first access carrier, the second access carrier used by the terminal device, so as to configure an access carrier for another terminal device. This reduces a probability of a collision between the terminal device and the another terminal device, and avoids interference on use of the another terminal device.

## BRIEF DESCRIPTION OF DRAWINGS

FIG. 1 is a schematic diagram of an application scenario of a random access method according to this application;
FIG. 2 is a flowchart of Embodiment 1 of a random access method according to this application;
FIG. 3 is a schematic structural diagram of Embodiment 1 of a random access apparatus according to this application;
FIG. 4 is a schematic structural diagram of Embodiment 2 of a random access apparatus according to this application; and
FIG. 5 is a schematic structural diagram of an embodiment of a terminal device according to this application.

## DESCRIPTION OF EMBODIMENTS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Most times of random access are initiated by terminal devices, by directly and randomly selecting available resources based on a configuration broadcast by a system, when the terminal devices have a requirement. A base station is responsible for resolving a generated collision among a plurality of terminal devices. Designing random access triggered by a physical downlink control channel (Physical Downlink Control Channel, PDCCH) order and indicating a random access resource for use to a terminal device by using the order are intended for some special scenarios in which the base station wants to reduce a probability of an access collision among some terminal devices. For example, the base station may reserve some resources for only the random access triggered by the order. The terminal device receiving the order uses these reserved resources, so that a collision probability can be greatly reduced.

It can be learned from the solutions in the background that, for some terminal devices triggered by orders to perform random access, after the random access fails for several times, the terminal devices change coverage levels, and randomly select carriers to initiate new attempts. For these terminal devices, it cannot be ensured that the randomly selected carriers and resources correspondingly used on the carriers are reserved by the base station, and consequently a collision probability greatly increases. For a network or another terminal device, because these terminal devices may randomly select reserved resources on other carriers, interference may be caused to terminals that should have used these resources.

A main reason for the foregoing problem is that the carriers selected after the coverage levels of the terminal devices are changed are random, and this is unknowable and uncontrollable to the base station. A new carrier selection method for this scenario needs to be designed. In other words, it needs to be ensured that the terminal devices can select carriers that support new coverage levels, and it further needs to be ensured that the selection is regular and is controllable to the base station. Based on this, this application provides a new access carrier determining solution, so that the base station can perform control, and interference on another terminal device is reduced.

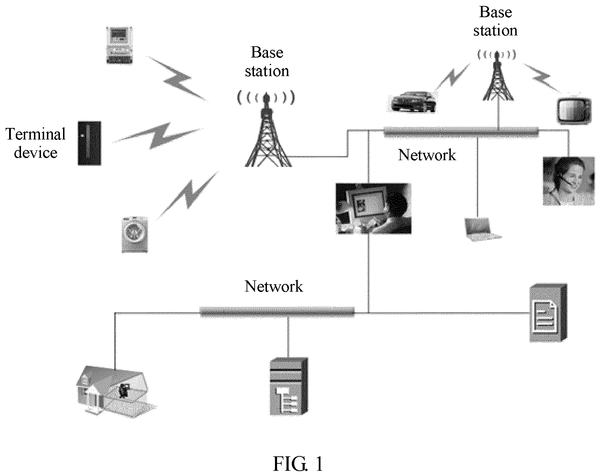

FIG. 1 is a schematic diagram of an application scenario of a random access method according to this application. As shown in FIG. 1, the random access method provided in this application may be applied to any wireless communications system, for example, may be applied to Internet of Things systems such as an NB-IoT system and an eMTC system that require low complexity and low power consumption of a terminal device, a conventional long term evolution (Long Term Evolution, LTE) system, an evolved universal mobile telecommunications system (Universal Mobile Telecommunications System, UMTS), and the like. For example, in an IoT communications system shown in FIG. 1, the solution may be applied to various terminal devices that can access a base station to exchange information. The terminal device may be a wireless terminal or a wired terminal. The wireless terminal may be a device that provides voice and/or other service data connectivity for a user, a handheld device having a wireless connection function, or another processing device connected to a wireless modem. The wireless terminal may communicate with one or more core networks through a radio access network (Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (Personal Communications Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile Console), a remote station (Remote Station), a remote terminal (Remote Terminal), an access terminal (Access Terminal), a user terminal (User Terminal), a user agent (User Agent), or user equipment (User Device or User Equipment), for example, a computer, a home appliance, an automobile, or a television. This is not limited herein.

The base station related to this application is also referred to as a radio access network (Radio Access Network, RAN) device, and is a device connecting a terminal to a wireless network. The base station may be a base transceiver station (Base Transceiver Station, BTS for short) in a global system for mobile communications (Global System of Mobile communications, GSM for short) or code division multiple access (Code Division Multiple Access, CDMA for short), may be a NodeB (NodeB, NB for short) in wideband code division multiple access (Wideband Code Division Multiple Access, WCDMA for short), or may be an evolved NodeB (Evolutional Node B, eNB or eNodeB for short) in long term evolution (Long Term Evolution, LTE for short), a relay station or an access point, a gNodeB in a future 5G network, or the like. This is not limited herein.

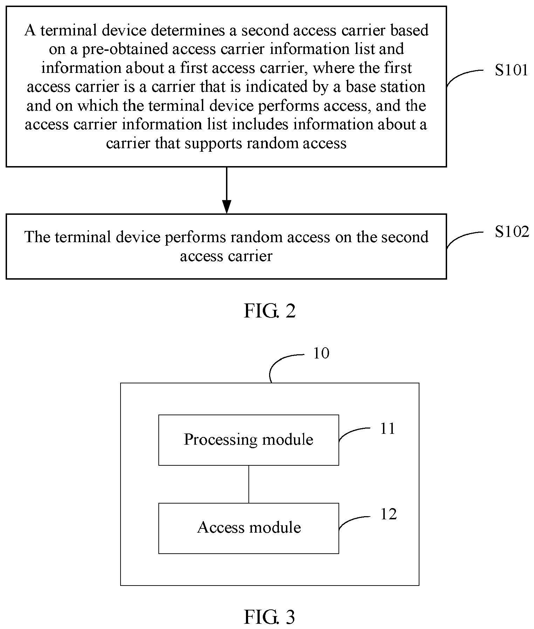

FIG. 2 is a flowchart of Embodiment 1 of a random access method according to this application. As shown in FIG. 2, in the application scenario shown in FIG 1, the random access method includes the following specific implementation steps.

S101. A terminal device determines a second access carrier based on a pre-obtained access carrier information list and information about a first access carrier, where the first access carrier is a carrier that is indicated by a base station and on which the terminal device performs access, and the access carrier information list includes information about a carrier that supports random access.

In this step, the first access carrier is the carrier that is indicated by the base station and on which the terminal device performs random access.

When initiating a random access process, the base station indicates used parameters such as a coverage level, a subcarrier index, and a carrier index to the terminal device, so that the terminal device can send, based on the coverage level, the subcarrier index, and the carrier index that are indicated by the base station, a random access preamble sequence at a corresponding carrier location by using a random access resource configuration corresponding to the coverage level. Normally, the terminal device receives a random access response returned by the base station. However, due to impact of the coverage level of the terminal device and another problem, after the terminal device performs random access for a plurality of times by using the first access carrier, but receives no random access response returned by the base station, the terminal device may adjust an access configuration based on an actual situation, for example, increase the coverage level.

In this case, the terminal device needs to determine, based on a new coverage level obtained after the coverage level is increased, a new random access carrier, namely, the second access carrier in this solution, in the access carrier information list of the carrier that supports random access.

In this solution, the terminal device no longer randomly selects a carrier, but redetermines the new second access carrier from the access carrier information list based on the first access carrier indicated by the base station, so that the base station can determine, based on the first access carrier, a carrier that may be used by the terminal device, so as to perform adjustment and control to avoid interference.

The terminal device may determine the second access carrier based on the first access carrier in any one of the following manners. In the following, the first implementation is provided as an illustrative example but not claimed in the present application. The claimed invention is based on the second implementation described below.

In a first implementation, the terminal device obtains an index of the second access carrier based on the information about the first access carrier by using a preset algorithm, and the terminal device determines the second access carrier from the pre-obtained access carrier information list based on the index of the second access carrier.

The foregoing solution means that the terminal device determines the index of the new second access carrier based on the information about the first access carrier, and then determines the second access carrier from the access carrier information list based on the determined index of the second access carrier. The access carrier information list may be obtained through broadcast by the base station. A specific calculation manner is determining the index of the second access carrier based on an index of the first access carrier and a quantity of all carriers used for the new coverage level. For example, a remainder obtained by dividing the index of the first access carrier by the quantity of all the carriers that support the new coverage level is used as the index of the second access carrier.

In a second implementation, the terminal device obtains a first carrier information list from the access carrier information list, where the first carrier information list includes information about a carrier that supports the new coverage level obtained after the terminal device increases the coverage level; the terminal device obtains an index of the second access carrier based on information about the first access carrier by using a preset algorithm; and the terminal device determines the second access carrier from the first carrier information list based on the index of the second access carrier.

The foregoing solution means that the terminal device first performs screening on the access carrier information list based on a specific condition, to screen out the first carrier information list that meets the condition. For example, the first carrier information list includes information about a non-anchor carrier that supports the new coverage level obtained after the terminal device increases the coverage level or information about all carriers that support the new coverage level obtained after the terminal device increases the coverage level. In other words, the information about all the carriers that can support the new coverage level of the terminal device may be screened out from the access carrier information list, to form the new first carrier information list, or information about all non-anchor carriers that can support the new coverage level of the terminal device may be screened out from the access carrier information list, to form the new first carrier information list. Then, the terminal device determines the second access carrier from the first carrier information list.

Specifically, the terminal device obtains the index of the second access carrier based on an index in the information about the first access carrier. An obtaining manner may be determining the index of the second access carrier based on the index of the first access carrier and a quantity of all carriers used for the new coverage level, or determining the index of the second access carrier based on the index of the first access carrier and a quantity of non-anchor carriers used for the new coverage level.

A manner of determining the index of the second access carrier provided in this application is as follows:

If the terminal device determines the second access carrier from the first carrier information list that includes the information about all the carriers that support the new coverage level, the index of the second access carrier is equal to a remainder obtained by dividing the index of the first access carrier by the quantity of all the carriers that support the new coverage level.

If the terminal device determines the second access carrier from the first carrier information list that includes the information about all the non-anchor carriers that support the new coverage level, the index of the second access carrier is equal to a remainder obtained by dividing the index of the first access carrier by the quantity of all the non-anchor carriers that support the new coverage level.

S102. The terminal device performs random access on the second access carrier.

In this step, after determining the second access carrier, the terminal device performs random access based on the new second access carrier, and may send a random access preamble sequence to the base station based on the new coverage level and the second access carrier, to complete the random access process.

If the terminal device receives a random access response (Random Access Response, RAR) returned by the base station, the access succeeds.

If the terminal device receives no random access response returned by the base station, the terminal device may continue to perform the random access process according to the foregoing process.

In specific implementation of the foregoing solution, the access carrier information list may be obtained by the terminal device by receiving a broadcast of the system before determining the second access carrier based on the pre-obtained access carrier information list and the information about the first access carrier.

According to the random access method provided in this embodiment, the terminal device determines the second access carrier based on the pre-obtained access carrier information list and the information about the first access carrier that is indicated by the base station and that can be used for access, the access carrier information list includes information about all carriers that support random access, and then the terminal device performs random access on the second access carrier. When performing random access, the terminal device determines the new second access carrier in the access carrier information list based on the first access carrier already known by the base station, instead of randomly selecting an access carrier. The base station may also determine, based on the indicated first access carrier, the second access carrier used by the terminal device, so as to configure an access carrier for another terminal device. This reduces a probability of a collision between the terminal device and the another terminal device, and avoids interference on use of the another terminal device.

Based on the foregoing embodiment, the following provides several specific processes to further describe this solution.

A first implementation solution is as follows:

For random access triggered by a PDCCH order, after several attempts of the terminal device fail, the terminal device may increase the coverage level, then determine a new access carrier (the first access carrier) based on Carrier_index (the index of the first access carrier) in the original PDCCH order, and then perform random access on the new access carrier. Specifically, a carrier that can be used for the current coverage level obtained after the coverage level increases may be selected based on a carrier configuration in the broadcast of the system and a carrier sequence in the configuration, to form a new carrier list (namely, the first carrier information list).

A new carrier index is calculated by using the following formula:

Carrier_index_new = Carrier_index mod (quantity of carriers that can be used for the current coverage level), where mod represents a modulo operation. Then, the new random access carrier is determined in the new carrier list by using Carrier_index_new.

In the foregoing solution, the new carrier list may include the information about all the carriers that support the new coverage level, or may include only the information about the non-anchor carrier that supports the new coverage level. Because some terminal devices (for example, a terminal of an R-13 type) can perform access on only anchor carriers (anchor carrier), load on the anchor carriers may be relatively heavy. Therefore, it is considered that the anchor carriers are avoided from being used during reselection, thereby avoiding a further increase of the load on the anchor carriers.

A second implementation solution is as follows:

For random access triggered by a PDCCH order, after several attempts of the terminal device fail, the terminal device may increase the coverage level. The terminal device determines a new access carrier (the second access carrier) based on Carrier_index (namely, the index of the first access carrier) in the PDCCH order of the base station, and then performs random access on the new access carrier.

For example, when the new access carrier is determined, a new carrier index may be specifically calculated by using the following formula:

Carrier_index_new = Carrier_index mod (quantity of carriers that can be used for the current coverage level), where mod represents a modulo operation. Then, the new random access carrier is determined, by using Carrier_index_new, in a carrier list in a configuration broadcast by the system. For example, an index value 0 represents a first carrier that is in the list and that can be used for random access at the current coverage level, and a value 1 represents a second carrier that is in the list and that can be used for random access at the current coverage level.

In this manner, a carrier used after the coverage level of the terminal device changes is not randomly selected, a selection manner and a corresponding formula are specified in a protocol, and the base station learns which new carrier is used when the terminal changes the coverage level. Therefore, the base station can avoid corresponding interference through configuration.

In a cell reselection process of the terminal device, to increase a probability that the terminal device changes, through reselection, to a cell located at a frequency that supports a multicast service, an offset $Qoffset_{SCPTM}$ for the frequency that supports the multicast service is introduced in related calculation. However, the offset appears in only neighboring cell-related calculation, to be specific, in only the following $R_n$:

$$R_s = Q_{meas,s} + Q_{Hyst} - Qoffset_{temp}$$

$$R_n = Q_{meas,n} - Qoffset - Qoffset_{temp}$$

$R_s$ is used for a serving cell, and $R_n$ is used for another neighboring cell. The newly introduced $Qoffset_{SCPTM}$ is included in only calculation of Qoffset. During reselection, a cell reselection condition is that a most appropriate cell is selected, for camping, from all cells in which $R_n > R_s$. After the reselection is completed, the terminal camps on the cell at the frequency that supports the multicast service. The cell that supports the multicast service changes from a previous target neighboring cell to a serving cell. $R_s$ no longer includes $Qoffset_{SCPTM}$. In this case, if frequencies at which other neighboring cells are located also support a related multicast service, the terminal may change, through reselection, to these cells again. In other words, a "ping-pong effect" is generated.

To avoid the "ping-pong effect", in this embodiment, an offset of the multicast service is applied to corresponding calculation of both the serving cell and the neighboring cell.

A possible calculation manner 1 is as follows:

$$R_s = Q_{meas,s} + Q_{Hyst} - Qoffset_{temp} + Qoffset_{SCPTM}$$

$$R_n = Q_{meas,n} - Qoffset - Qoffset_{temp} + Qoffset_{SCPTM}$$

In other words, $Qoffset_{SCPTM}$ is used as an independent offset, and is explicitly added to calculation of $R_s$ and $R_n$. To enable the terminal device to change, through selection as far as possible, to the cell/frequency that supports the multicast service, a value of the offset is a non-negative value or a positive value.

Another calculation manner 2 is as follows:

$$R_s = Q_{meas,s} + Q_{Hyst} - Qoffset_{temp} - Qoffset_{SCPTM}$$

$$R_n = Q_{meas,n} - Qoffset - Qoffset_{temp} - Qoffset_{SCPTM}$$

In other words, $Qoffset_{SCPTM}$ is used as an independent offset, and is explicitly added to calculation of $R_s$ and $R_n$. To enable the terminal device to change, through selection as far as possible, to the cell/frequency that supports the multicast service, a value of the offset is a non-positive value or a negative value.

In addition, the offset may be alternatively used as an implicit offset, and a value of the offset is implicitly added to an existing offset. For example, a calculation manner 3 is as follows:

$$R_s = Q_{meas,s} + Q_{Hyst} - Qoffset_{temp}$$

$$R_n = Q_{meas,n} - Qoffset - Qoffset_{temp}$$

In the calculation of the serving cell, if the multicast offset exists, a value of $Q_{Hyst}$ is $Q_{Hyst}$ plus the multicast offset, for example, $Qoffset_{SCPTM}$, or a value of $Qoffset_{temp}$ is a value of $Qoffset_{temp}$ plus or minus the multicast offset, for example, $Qoffset_{SCPTM}$. In this case, a value of the multicast offset may be one of a non-positive value, a non-negative value, a positive value, and a negative value.

In the calculation of the neighboring cell, if the multicast offset exists, a value of $Qoffset_{frequency}$ is $Qoffset_{frequency}$ plus a value of $Qoffset_{SCPTM}$. In this case, the value of $Qoffset_{SCPTM}$ is a non-positive value or a negative value.

Similarly, another indication manner in which explicit indication and implicit indication are mixed is as follows: In the calculation of the serving cell, the multicast offset explicitly exists. To enable the terminal device to change, through selection as far as possible, to the cell/frequency that supports the multicast service, a value of the offset is a non-negative value or a positive value.

In the calculation of the neighboring cell, the multicast offset implicitly exists. An implicit existence manner in the neighboring cell is the same as an implicit representation in the foregoing calculation of the neighboring cell. In other words, in the calculation of the neighboring cell, if the multicast offset exists, a value of $Qoffset_{frequency}$ is $Qoffset_{frequency}$ plus a value of $Qoffset_{SCPTM}$. In this case, the value of $Qoffset_{SCPTM}$ is a non-positive value or a negative value. A calculation manner 4 is as follows:

$$R_s = Q_{meas,s} + Q_{Hyst} - Qoffset_{temp} + Qoffset_{SCPTM}$$

$$R_n = Q_{meas,n} - Qoffset - Qoffset_{temp}$$

Similarly, another indication manner in which explicit indication and implicit indication are mixed is as follows: In the calculation of the serving cell, the multicast offset explicitly exists. To enable the terminal device to change, through selection as far as possible, to the cell/frequency that supports the multicast service, a value of the offset is a non-positive value or a negative value.

In the calculation of the neighboring cell, the multicast offset implicitly exists. An implicit existence manner in the neighboring cell is the same as an implicit representation in the foregoing calculation of the neighboring cell. In other words, in the calculation of the neighboring cell, if the multicast offset exists, a value of $Qoffset_{frequency}$ is $Qoffset_{frequency}$ plus a value of $Qoffset_{SCPTM}$. In this case, the value of $Qoffset_{SCPTM}$ is a non-positive value or a negative value. A calculation manner 5 is as follows:

$$R_s = Q_{meas,s} + Q_{Hyst} - Qoffset_{temp} - Qoffset_{SCPTM}$$

$$R_n = Q_{meas,n} - Qoffset - Qoffset_{temp}$$

In addition, due to use of the offset, many terminal devices camp on a frequency that supports some multicast services. After a multicast service at the frequency at which a terminal device is located ends, if quality of a serving cell is good, the terminal does not trigger a cell reselection service. In this case, a large quantity of terminals camp on the frequency, and consequently load of the frequency may be relatively heavy. This is not conducive to load balancing of a network.

In a current cell reselection measurement rule, to limit measurement performed by a terminal device in an idle state, two measurement thresholds are defined in a system message: an intra-frequency measurement threshold $S_{IntraSearchP}$ and an inter-frequency measurement threshold $S_{nonIntraSearchP}$. When a measurement quantity of the serving cell is greater than a corresponding threshold, the terminal device performs no corresponding measurement. For example, when a threshold of the serving cell is higher than the intra-frequency measurement threshold, in other words, Srxlev > $S_{IntraSearchP}$, the terminal device may choose to perform no intra-frequency measurement. When a threshold of the serving cell is higher than the inter-frequency measurement threshold, in other words, Srxlev > $S_{nonIntraSearchP}$, the terminal device may choose to perform no inter-frequency measurement.

To resolve a problem that after the foregoing multicast service ends, the terminal stays in the serving cell, and triggers no neighboring cell measurement to enable the terminal device to change, through reselection, to another frequency/cell for camping, in a possible implementation, after the multicast service at the frequency at which the terminal is located ends, the terminal device ignores a measurement trigger threshold of the current serving cell, and starts neighboring cell measurement. Details are as follows:

- The terminal device ignores the intra-frequency cell measurement threshold $S_{IntraSearchP}$: After the multicast service ends, the terminal device ignores the intra-frequency measurement threshold, and starts intra-frequency measurement.
- Alternatively, the terminal device ignores the inter-frequency cell measurement threshold $S_{nonIntraSearchP}$: After the multicast service ends, the terminal device ignores the inter-frequency measurement threshold, and starts inter-frequency measurement.
- Alternatively, the terminal device ignores the intra-frequency cell measurement threshold $S_{IntraSearchP}$ and the inter-frequency measurement threshold $S_{nonIntraSearchP}$: After the multicast service ends, the terminal device ignores the intra-frequency measurement threshold and the inter-frequency measurement threshold, and starts intra-frequency measurement and inter-frequency measurement.

FIG. 3 is a schematic structural diagram of Embodiment 1 of a random access apparatus according to this application. As shown in FIG. 3, the random access apparatus 10 includes:

a processing module 11, configured to determine a second access carrier based on a pre-obtained access carrier information list and information about a first access carrier, where the first access carrier is a carrier that is indicated by a base station and on which the terminal device performs access, and the access carrier information list includes information about a carrier that supports random access; and
an access module 12, configured to perform random access on the second access carrier obtained by the processing module 11.

The random access apparatus provided in this embodiment is configured to implement the technical solution on a terminal device side in any one of the foregoing method embodiments, and implementation principles and technical effects of the random access apparatus are similar to those of the method embodiment. Details are not described herein again.

In an illustrative example not forming part of the claimed invention, the processing module 11 is specifically configured to:

obtain an index of the second access carrier based on the information about the first access carrier by using a preset algorithm; and
determine the second access carrier from the pre-obtained access carrier information list based on the index of the second access carrier.

In the present invention, the processing module 11 is specifically configured to:

obtain a first carrier information list from the access carrier information list, where the first carrier information list includes information about a carrier that supports a new coverage level obtained after the terminal device increases a coverage level;
obtain an index of the second access carrier based on the information about the first access carrier by using a preset algorithm; and
determine the second access carrier from the first carrier information list based on the index of the second access carrier.

Optionally, the first carrier information list obtained by the processing module 11 includes information about a non-anchor carrier that supports the new coverage level obtained after the terminal device increases the coverage level or information about all carriers that support the new coverage level obtained after the terminal device increases the coverage level.

In the present invention, the processing module 11 is specifically configured to:
obtain the index of the second access carrier through calculation based on an index of the first access carrier by using the preset algorithm, where the preset algorithm includes: determining the index of the second access carrier based on the index of the first access carrier and a quantity of all carriers used for the new coverage level, or determining the index of the second access carrier based on the index of the first access carrier and a quantity of non-anchor carriers used for the new coverage level, and the information about the first access carrier includes the index of the first access carrier.

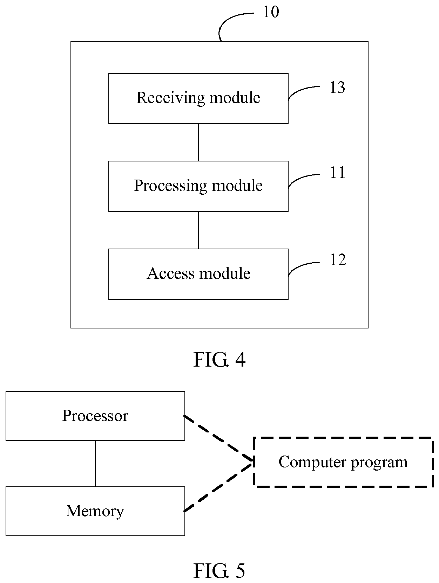

FIG. 4 is a schematic structural diagram of Embodiment 2 of a random access apparatus according to this application. As shown in FIG. 4, based on any one of the foregoing solutions, the random access apparatus 10 further includes:
a receiving module 13, configured to receive the access carrier information list broadcast by a system.

The random access apparatus provided in this embodiment is configured to implement the technical solution on a terminal device side in any one of the foregoing method embodiments, and implementation principles and technical effects of the random access apparatus are similar to those of the method embodiment. Details are not described herein again.

FIG. 5 is a schematic structural diagram of an embodiment of a terminal device according to this application. As shown in FIG. 5, the terminal device includes a memory, a processor, and a computer program. The computer program is stored in the memory, and the processor runs the computer program to implement the random access method provided in any one of the foregoing embodiments.

In specific implementation of the terminal device, there is at least one processor, configured to execute an executable instruction, namely, the computer program, stored in the memory, so that the terminal device exchanges data with a base station through a communications interface to perform the random access method provided in the first aspect or the implementations of the first aspect. Optionally, the memory may be further integrated into the processor.

Optionally, the terminal device may further include a transmitter, a receiver, and the like.

This application further provides a storage medium, including a readable storage medium and a computer program. The computer program is used to implement the random access method provided in any one of the foregoing embodiments.

This application further provides a program product, the program product includes a computer program (namely, an executable instruction), and the computer program is stored in a readable storage medium. At least one processor of a terminal device may read the computer program from the readable storage medium, and the at least one processor executes the computer program, so that the terminal device implements the random access method provided in the foregoing implementations.

A person of ordinary skill in the art may understand that all or some of the steps of the method embodiments may be implemented by a program instructing related hardware. The program may be stored in a computer readable memory. When the program is executed, the steps of the method embodiments are performed. The memory (storage medium) includes a read-only memory (read-only memory, ROM), a RAM, a flash memory, a hard disk, a solid-state drive, a magnetic tape (magnetic tape), a floppy disk (floppy disk), an optical disc (optical disc), and any combination thereof.

The scope of protection shall be defined by the appended claims.

**Claims**

1. A random access method, comprising:

    determining (S101), by a terminal device, a second access carrier based on a pre-obtained access carrier information list and information about a first access carrier, wherein the first access carrier is a carrier that is indicated by a base station and on which the terminal device performs access, and the pre-obtained access carrier information list comprises information about a carrier that supports random access; and
    performing (S102), by the terminal device, random access on the second access carrier,
    wherein the first access carrier and the second access carrier are carriers on which the terminal device performs random access;
    wherein the determining, by a terminal device, a second access carrier based on an pre-obtained access carrier information list and information about a first access carrier comprises:

        obtaining, by the terminal device, a first carrier information list from the pre-obtained access carrier information list, wherein the first carrier information list comprises information about a carrier that supports a new coverage level obtained after the terminal device increases a coverage level;
        obtaining, by the terminal device, an index of the second access carrier based on the information about the first access carrier by using a preset algorithm; and
        determining, by the terminal device, the second access carrier from the first carrier information list based on the index of the second access carrier; and
    wherein the obtaining, by the terminal device, an index of the second access carrier based on the information about the first access carrier by using a preset algorithm comprises:
        obtaining, by the terminal device, the index of the second access carrier through calculation based on an index of the first access carrier by using the preset algorithm, wherein the preset algorithm comprises: determining the index of the second access carrier based on the index of the first access carrier and a quantity of all carriers used for the new coverage level, or determining the index of the second access carrier based on the index of the first access carrier and a quantity of non-anchor carriers used for the new coverage level, and the information about the first access carrier comprises the index of the first access carrier.

2. The method according to claim 1, wherein the first carrier information list comprises information about a non-anchor carrier that supports the new coverage level obtained after the terminal device increases the coverage level or information about all carriers that support the new coverage level obtained after the terminal device increases the coverage level.

3. The method according to claim 1 or 2, wherein before the determining, by a terminal device, a second access carrier based on a pre-obtained access carrier information list and information about a first access carrier, the method further comprises:
    receiving, by the terminal device, the pre-obtained access carrier information list broadcast by a system.

4. A terminal device configured to determine a second access carrier based on a pre-obtained access carrier information list and information about a first access carrier, wherein the first access carrier is a carrier that is indicated by a base station and on which the terminal device performs access, and the pre-obtained access carrier information list comprises information about a carrier that supports random access; the terminal device configured to perform random access on the second access carrier

wherein the first access carrier and the second access carrier are carriers on which the terminal device performs random access;

wherein the terminal device is configured to:

obtain a first carrier information list from the pre-obtained access carrier information list, wherein the first carrier information list comprises information about a carrier that supports a new coverage level obtained after the terminal device increases a coverage level;

obtain an index of the second access carrier based on the information about the first access carrier by using a preset algorithm; and

determine the second access carrier from the first carrier information list based on the index of the second access carrier;

wherein the terminal device is configured to:

obtain the index of the second access carrier through calculation based on an index of the first access carrier by using the preset algorithm, wherein the preset algorithm comprises: determining the index of the second access carrier based on the index of the first access carrier and a quantity of all carriers used for the new coverage level, or determining the index of the second access carrier based on the index of the first access carrier and a quantity of non-anchor carriers used for the new coverage level, and the information about the first access carrier comprises the index of the first access carrier.

5. The terminal device according to claim 4, wherein the first carrier information list comprises information about a non-anchor carrier that supports the new coverage level obtained after the terminal device increases the coverage level or information about all carriers that support the new coverage level obtained after the terminal device increases the coverage level.

6. The terminal device according to claim 4 or 5, wherein the terminal device is further configured to receive the pre-obtained access carrier information list broadcast by a system.

7. A storage medium, comprising a readable storage medium and a computer program, wherein the computer program causes a processor to perform the random access method according to any one of claims 1 to 3.

**Patentansprüche**

1. Direktzugriffsverfahren, umfassend:

Ermitteln (S101), durch eine Endgerätevorrichtung, eines zweiten Zugriffsträgers aufgrund einer zuvor erhaltenen Liste von Zugriffsträgerinformationen und von Informationen über einen ersten Zugriffsträger, wobei der erste Zugriffsträger ein Träger ist, der von einer Basisstation angezeigt wird und auf dem die Endgerätevorrichtung einen Zugriff durchführt, und wobei die zuvor erhaltene Liste der Zugriffsträgerinformationen Informationen über einen Träger umfasst, der einen Direktzugriff unterstützt; und

Durchführen (S102), durch die Endgerätevorrichtung, eines Direktzugriffs auf dem zweiten Zugriffsträger, wobei der erste Zugriffsträger und der zweite Zugriffsträger Träger sind, auf denen die Endgerätevorrichtung einen Direktzugriff durchführt;

wobei das Ermitteln, durch eine Endgerätevorrichtung, eines zweiten Zugriffsträgers aufgrund einer zuvor erhaltenen Liste von Zugriffsträgerinformationen und von Informationen über einen ersten Zugriffsträger umfasst:

Erhalten, in der Endgerätevorrichtung, einer ersten Liste von Trägerinformationen aus der zuvor erhaltenen Liste von Zugriffsträgerinformationen, wobei die erste Liste von Trägerinformationen Informationen über einen Träger umfasst, der einen neuen Abdeckungsgrad unterstützt, nachdem die Endgerätevorrichtung einen Abdeckungsgrad vergrößert;

Erhalten, in der Endgerätevorrichtung, eines Index des zweiten Zugriffsträgers aufgrund von Informationen über den ersten Zugriffsträger, indem ein voreingestellter Algorithmus verwendet wird; und

Ermitteln, durch die Endgerätevorrichtung, des zweiten Zugriffsträgers aus der ersten Liste von Trägerinformationen aufgrund des Index des zweiten Zugriffsträgers; und

wobei das Erhalten, in der Endgerätevorrichtung, eines Index des zweiten Zugriffsträgers aufgrund von Informationen über den ersten Zugriffsträger, indem ein voreingestellter Algorithmus verwendet wird, umfasst:

Erhalten, in der Endgerätevorrichtung, des Index des zweiten Zugriffsträgers durch eine Berechnung aufgrund eines Index des ersten Zugriffsträgers, indem der voreingestellte Algorithmus verwendet wird, wobei der voreingestellte Algorithmus umfasst: Ermitteln des Index des zweiten Zugriffsträgers aufgrund des Index des ersten Zugriffsträgers und einer Anzahl von allen Trägern, die für den neuen Abdeckungsgrad verwendet werden, oder Ermitteln des Index des zweiten Zugriffsträgers aufgrund des Index des ersten Zugriffsträgers und einer Anzahl von Nicht-Ankerträgern, die für den neuen Abdeckungsgrad verwendet werden, und wobei die Informationen über den ersten Zugriffsträger den Index des ersten Zugriffsträgers umfassen.

2. Verfahren nach Anspruch 1, wobei die erste Liste von Trägerinformationen Informationen über einen Nicht-Ankerträger umfasst, der den neuen Abdeckungsgrad unterstützt, der erhalten wird, nachdem die Endgerätevorrichtung den Abdeckungsgrad vergrößert, oder Informationen über alle Träger umfasst, die den neuen Abdeckungsgrad unterstützen, das erhalten wird, nachdem die Endgerätevorrichtung den Abdeckungsgrad vergrößert.

3. Verfahren nach Anspruch 1 oder 2, wobei das Verfahren vor dem Ermitteln, durch eine Endgerätevorrichtung, eines zweiten Zugriffsträgers aufgrund einer zuvor erhaltenen Liste von Zugriffsträgerinformationen und von Informationen über einen ersten Zugriffsträger außerdem umfasst:

Empfangen, in der Endgerätevorrichtung, der zuvor erhaltenen Liste von Zugriffsträgerinformationen, die von einem System verbreitet wird.

4. Endgerätevorrichtung, die konfiguriert ist zum Ermitteln eines zweiten Zugriffsträgers aufgrund einer zuvor erhaltenen Liste von Zugriffsträgerinformationen und von Informationen über einen ersten Zugriffsträger, wobei der erste Zugriffsträger ein Träger ist, der von einer Basisstation angezeigt wird und auf dem die Endgerätevorrichtung einen Zugriff durchführt, und wobei die zuvor erhaltene Liste der Zugriffsträgerinformationen Informationen über einen Träger umfasst, der einen Direktzugriff unterstützt;

wobei die Endgerätevorrichtung konfiguriert ist zum Durchführen eines Direktzugriffs auf dem zweiten Zugriffsträger,

wobei der erste Zugriffsträger und der zweite Zugriffsträger Träger sind, auf denen die Endgerätevorrichtung einen Direktzugriff durchführt;

wobei die Endgerätevorrichtung konfiguriert ist zum:

Erhalten einer ersten Liste von Trägerinformationen aus der zuvor erhaltenen Liste von Zugriffsträgerinformationen, wobei die erste Liste von Trägerinformationen Informationen über einen Träger umfasst, der einen neuen Abdeckungsgrad unterstützt, nachdem die Endgerätevorrichtung einen Abdeckungsgrad vergrößert;

Erhalten eines Index des zweiten Zugriffsträgers aufgrund von Informationen über den ersten Zugriffsträger, indem ein voreingestellter Algorithmus verwendet wird; und Ermitteln des zweiten Zugriffsträgers aus der ersten Liste von Trägerinformationen aufgrund des Index des zweiten Zugriffsträgers;

wobei die Endgerätevorrichtung konfiguriert ist zum:

Erhalten des Index des zweiten Zugriffsträgers durch eine Berechnung aufgrund eines Index des ersten Zugriffsträgers, indem der voreingestellte Algorithmus verwendet wird, wobei der voreingestellte Algorithmus umfasst: Ermitteln des Index des zweiten Zugriffsträgers aufgrund des Index des ersten Zugriffsträgers und einer Anzahl von allen Trägern, die für den neuen Abdeckungsgrad verwendet werden, oder Ermitteln des Index des zweiten Zugriffsträgers aufgrund des Index des ersten Zugriffsträgers und einer Anzahl von Nicht-Ankerträgern, die für den neuen Abdeckungsgrad verwendet werden, und wobei die Informationen über den ersten Zugriffsträger den Index des ersten Zugriffsträgers umfassen.

5. Endgerätevorrichtung nach Anspruch 4, wobei die erste Liste von Trägerinformationen Informationen über einen Nicht-Ankerträger umfasst, der den neuen Abdeckungsgrad unterstützt, der erhalten wird, nachdem die Endgerätevorrichtung den Abdeckungsgrad vergrößert, oder Informationen über alle Träger umfasst, die den neuen Abdeckungsgrad unterstützen, der erhalten wird, nachdem die Endgerätevorrichtung den Abdeckungsgrad vergrößert.

6. Endgerätevorrichtung nach Anspruch 4 oder 5, wobei die Endgerätevorrichtung außerdem konfiguriert ist zum Empfangen der zuvor erhaltenen Liste von Zugriffsträgerinformationen, die von einem System verbreitet wird.

7. Speichermedium, das ein lesbares Speichermedium und ein Computerprogramm umfasst, wobei das Computerprogramm einen Computer veranlasst, das Direktzugriffsverfahren nach einem der Ansprüche 1 bis 3 durchzuführen.

**Revendications**

1. Procédé d'accès aléatoire, comprenant les étapes consistant à :

   déterminer (S101), par un dispositif terminal, une seconde porteuse d'accès sur la base d'une liste d'informations de porteuses d'accès pré-obtenue et d'informations concernant une première porteuse d'accès, la première porteuse d'accès étant une porteuse qui est indiquée par une station de base et sur laquelle le dispositif terminal effectue un accès, et la liste d'informations de porteuses d'accès pré-obtenue comprenant des informations concernant une porteuse qui prend en charge un accès aléatoire ; et
   effectuer (S102), par le dispositif terminal, un accès aléatoire sur la seconde porteuse d'accès,
   la première porteuse d'accès et la seconde porteuse d'accès étant des porteuses sur lesquelles le dispositif terminal effectue un accès aléatoire ;
   la détermination, par un dispositif terminal, d'une seconde porteuse d'accès sur la base d'une liste d'informations de porteuses d'accès pré-obtenue et d'informations concernant une première porteuse d'accès comprenant les étapes consistant à :

   obtenir, par le dispositif terminal, une première liste d'informations de porteuses à partir de la liste d'informations de porteuses d'accès pré-obtenue, la première liste d'informations de porteuses comprenant des informations concernant une porteuse qui prend en charge un nouveau niveau de couverture obtenu après que le dispositif terminal a augmenté un niveau de couverture ;
   obtenir, par le dispositif terminal, un index de la seconde porteuse d'accès sur la base des informations concernant la première porteuse d'accès au moyen d'un algorithme prédéfini ; et
   déterminer, par le dispositif terminal, la seconde porteuse d'accès à partir de la première liste d'informations de porteuses sur la base de l'index de la seconde porteuse d'accès ; et
   l'obtention, par le dispositif terminal, d'un index de la seconde porteuse d'accès sur la base des informations concernant la première porteuse d'accès au moyen d'un algorithme prédéfini comprenant l'étape consistant à :
   obtenir, par le dispositif terminal, l'index de la seconde porteuse d'accès par calcul sur la base d'un index de la première porteuse d'accès au moyen de l'algorithme prédéfini, l'algorithme prédéfini comprenant : la détermination de l'index de la seconde porteuse d'accès sur la base de l'index de la première porteuse d'accès et d'un nombre de toutes les porteuses utilisées pour le nouveau niveau de couverture ou bien la détermination de l'index de la seconde porteuse d'accès sur la base de l'index de la première porteuse d'accès et d'un nombre de porteuses de non-ancrage utilisées pour le nouveau niveau de couverture, et les informations concernant la première porteuse d'accès comprenant l'index de la première porteuse d'accès.

2. Procédé selon la revendication 1, dans lequel la première liste d'informations de porteuses comprend des informations concernant une porteuse de non-ancrage qui prend en charge le nouveau niveau de couverture obtenu après que le dispositif terminal a augmenté le niveau de couverture ou bien des informations concernant toutes les porteuses qui prennent en charge le nouveau niveau de couverture obtenu après que le dispositif terminal a augmenté le niveau de couverture.

3. Procédé selon la revendication 1 ou 2, le procédé comprenant en outre, avant la détermination, par un dispositif terminal, d'une seconde porteuse d'accès sur la base d'une liste d'informations de porteuses d'accès pré-obtenue et d'informations concernant une première porteuse d'accès, l'étape consistant à :
   recevoir, par le dispositif terminal, la liste d'informations de porteuses d'accès pré-obtenue diffusée par un système.

4. Dispositif terminal configuré pour déterminer une seconde porteuse d'accès sur la base d'une liste d'informations de porteuses d'accès pré-obtenue et d'informations concernant une première porteuse d'accès, la première porteuse d'accès étant une porteuse qui est indiquée par une station de base et sur laquelle le dispositif terminal effectue un accès, et la liste d'informations de porteuses d'accès pré-obtenue comprenant des informations concernant une porteuse qui prend en charge un accès aléatoire ; le dispositif terminal étant configuré pour effectuer un accès aléatoire sur la seconde porteuse d'accès, la première porteuse d'accès et la seconde porteuse d'accès étant des porteuses sur lesquelles le dispositif terminal effectue un accès aléatoire ;
   le dispositif terminal étant configuré pour :

obtenir une première liste d'informations de porteuses à partir de la liste d'informations de porteuses d'accès pré-obtenue, la première liste d'informations de porteuses comprenant des informations concernant une porteuse qui prend en charge un nouveau niveau de couverture obtenu après que le dispositif terminal a augmenté un niveau de couverture ;

obtenir un index de la seconde porteuse d'accès sur la base des informations concernant la première porteuse d'accès au moyen d'un algorithme prédéfini ; et

déterminer la seconde porteuse d'accès à partir de la première liste d'informations de porteuses sur la base de l'index de la seconde porteuse d'accès ;

le dispositif terminal étant configuré pour :

obtenir l'index de la seconde porteuse d'accès par calcul sur la base d'un index de la première porteuse d'accès au moyen de l'algorithme prédéfini, l'algorithme prédéfini comprenant : la détermination de l'index de la seconde porteuse d'accès sur la base de l'index de la première porteuse d'accès et d'un nombre de toutes les porteuses utilisées pour le nouveau niveau de couverture ou bien la détermination de l'index de la seconde porteuse d'accès sur la base de l'index de la première porteuse d'accès et d'un nombre de porteuses de non-ancrage utilisées pour le nouveau niveau de couverture, et les informations concernant la première porteuse d'accès comprenant l'index de la première porteuse d'accès.

**5.** Dispositif terminal selon la revendication 4, dans lequel la première liste d'informations de porteuses comprend des informations concernant une porteuse de non-ancrage qui prend en charge le nouveau niveau de couverture obtenu après que le dispositif terminal a augmenté le niveau de couverture ou bien des informations concernant toutes les porteuses qui prennent en charge le nouveau niveau de couverture obtenu après que le dispositif terminal a augmenté le niveau de couverture.

**6.** Dispositif terminal selon la revendication 4 ou 5, le dispositif terminal étant en outre configuré pour recevoir la liste d'informations de porteuses d'accès pré-obtenue diffusée par un système.

**7.** Support de stockage, comprenant un support de stockage lisible et un programme informatique, le programme informatique amenant un processeur à effectuer le procédé d'accès aléatoire selon l'une quelconque des revendications 1 à 3.

FIG. 1

A terminal device determines a second access carrier based on a pre-obtained access carrier information list and information about a first access carrier, where the first access carrier is a carrier that is indicated by a base station and on which the terminal device performs access, and the access carrier information list includes information about a carrier that supports random access

S101

The terminal device performs random access on the second access carrier

S102

FIG. 2

10

Processing module

11

Access module

12

FIG. 3

```
                          ┌─ 10
     ┌──────────────────────────────┐
     │    ┌────────────────┐ ┌─ 13   │
     │    │ Receiving module │       │
     │    └────────────────┘         │
     │            │                  │
     │    ┌────────────────┐ ┌─ 11   │
     │    │ Processing module │      │
     │    └────────────────┘         │
     │            │                  │
     │    ┌────────────────┐ ┌─ 12   │
     │    │  Access module   │       │
     │    └────────────────┘         │
     └──────────────────────────────┘
```

FIG. 4

```
     ┌──────────────┐
     │  Processor   │ ╲
     └──────────────┘   ╲   ┌ ─ ─ ─ ─ ─ ─ ─ ─ ┐
            │             ╲    Computer program
     ┌──────────────┐   ╱   └ ─ ─ ─ ─ ─ ─ ─ ─ ┘
     │   Memory     │ ╱
     └──────────────┘
```

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012063302 A

### Non-patent literature cited in the description

- **HUAWEI.** Introduction of NB-IoT Enhancements other than Multicast. *3GPP DRAFT; 36331_CR2625R2_(REL-14)_R2-1702194, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 13 February 2017, vol. RAN WG2, http://www.3gpp.org/ftp/Meetings_3GPP_SYNC/RAN/Docs

- **SEQUANS COMMUNICATIONS.** Remaining aspects of NPRACH on a non-anchor carrier. *3GPP DRAFT; R2-1701662 REMAINING ASPECTS OF NPRACH ON A NON-ANCHOR CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED,* 04 February 2017, vol. RAN WG2, http://www.3gpp.org/ftp/tsg_ran/WG2_RL2/TSGR2_97/Docs